# EUROPÄISCHE PATENTANMELDUNG

(11) **EP 1 001 590 A2**
(43) Veröffentlichungstag der Anmeldung: **17.05.2000**
(21) Anmeldenummer: 99122554.1
(22) Anmeldetag: 12.11.1999
(51) Int. Cl.: H04M 3/42

(54) **Anruf von ortsnahen Zielen mittels netzweit einheitlicher Interessen- oder Zielgruppenrufnummern**

(30) Priorität: 12.11.1998 DE 19852103
(71) Anmelder: DeTeMobil Deutsche Telekom MobilNet GmbH, 53227 Bonn (DE)
(72) Erfinder: Keller, Walter, 40880 Ratingen (DE)

(57) **Zusammenfassung**

Die vorliegende Erfindung beschreibt ein technisches Verfahren, auf dessen Basis der Betrieb ortabhängiger Vermittlungsdienste in Telekommunikationsnetzen, insbesondere auch in Mobilfunknetzen derart realisierbar wird, daß der jeweilige Anrufer mittels einer netzweit einheitlichen Interessen- oder Zielgruppenrufnummer, vorzugsweise einer Kurzrufnummer, ein individuelles ortnahes Ziel erreichen kann.

## Beschreibung

Die Erfindung betrifft ein Verfahren zum Betrieb ortabhängiger Vermittlungsdienste in Telekommunikationsnetzen, insbesondere auch in Mobilfunknetzen, nach dem Oberbegriff des Patentanspruchs 1.

Bekannt sind Verfahren im beispielsweise Telekom-Festnetz, wobei netzweit und unabhängig vom jeweiligen Ort des Anrufers eine einheitliche Zugangsnummer zum Verbindungsaufbau zu einem bestimmten Ziel gewählt wird. Je nach Verwendungsart und Bepreisung sind hierzu beispielsweise die Vorwahl-Ziffernfolgen 0170.., 0180.. u. 0190.. gebräuchlich. Handelt es sich beim Kommunikationsziel nicht um einen Einzelanschluß, sondern beispielsweise um ein bundesweites Netz o.ä., so existieren bedarfsweise mehrere Netzübergangspunkte, wobei der jeweilige Verkehrsübergabepunkt insbesondere nach kommerziellen Kriterien optimiert wird (beispielsweise ursprungsnah). Hier wird jedoch stets an den gleichen Vertragspartner übergeben, wobei verkehrs- oder regionalbedingt mehr als ein Übergabepunkt existieren können.

Andererseits existiert im Telematik-Bereich ein gemeinsamer Verkehrsfunkdienst von Anbietern. Dabei wird, initiert durch eine Kurzwahl, vom jeweiligen mobilen Terminal eine Verbindung zu einem zentralen Diensteserver aufgebaut, der wiederum mit einem Staumeldeserver eines externen Partners verbunden ist. Der Staumeldeserver liefert die bundesweiten Informationen zu Verkehrsstaus, während der Verkehrsfunkserver das Interface zum Kunden darstellt. Hier sind bestimmte Diensteparameter, wie automatischer Rückruf, Auswahl einer Region etc. Programmierbar.

Bisher ist jedoch kein Verfahren bekannt, bei dem unterschiedliche, insbesondere regional verteilte individuelle Ziele über eine netzweite einheitliche Rufnummer, vorzugsweise eine Kurzrufnummer, erreicht werden können. Anwendungen für solche 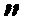 Dienste" können beispielsweise überregionale Interessen- oder branchenspezifische Zielgruppen sein, die zwar durch einem gemeinsamen Oberbegriff (Titel, Name, Branche o.ä.) gekennzeichnet werden können, jedoch nicht über eine gemeinsamen Rechtsform (Unternehmen, Verband, Verein etc.) verfügen. Solche, nur durch einen gemeinsamen Oberbegriff definierte Kundengruppen treten in der Regel nicht als Vertragspartner gegenüber dem Telekommunikationsnetzbetreiber auf (können beispielsweise sogar im Wettbewerb zueinander stehen). Demgemäß sind solche Strukturen im EDV-unterlegten Kundenverhältnis nicht abgebildet und können auch technisch nicht verwaltet und betrieben werden. Als Beispiele für solche, durch einen gemeinsamen Oberbegriff titulierbaren Interessengemeinschaften, die einen Bedarf haben, bundesweit unter der gleichen Rufnummer von ortsnahen Anrufern erreichbar zu sein, können Polizeidienststellen, Sicherheitsdienste, Notdienste, Handwerker, Abschleppdienste, Taxiunternehmen, Handelsunternehmen und Handelsketten, Touristik-Informationen, Behörden und Verwaltungen, Parteien und Verbände, Schwimmbäder , Kinos, Veranstalter, Restaurants, Verkehrsbetriebe, Reisebüros, Vertriebsniederlassungen etc. angesehen werden.

Der vorliegenden Erfindung liegt die Aufgabe zugrunde, ein technisches Verfahren vorzuschlagen, auf dessen Basis der Betrieb ortabhängiger Vermittlungsdienste in Telekommunikationsnetzen, insbesondere auch in Mobilfunknetzen derart realisierbar ist, daß der jeweilige Anrufer mittels einer netzweit einheitlichen Interessen- oder Zielgruppenrufnummer, vorzugsweise einer Kurzrufnummer, ein individuelles ortnahes Ziel erreichen kann. Als Oberbegriff für eine Interessen- oder Zielgruppenzugehörigkeit wird nachfolgend einheitlich der Begriff 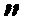 Branche" verwendet.

Gelöst wird diese Aufgabe durch die kennzeichnenden Merkmale des Patentanspruchs 1.

Das erfindungsgemäße Verfahren weist folgende Vorteile auf:

Der Anrufer kann durch dieses Verfahren mittels einer netzweit einheitlichen Branchenrufnummer den netzbetreiber- oder serviceproviderseitig ortsspezifisch zugeordneten individuellen Branchenpartner vorzugsweise automatisch und direkt erreichen.
Eine geeignete Menuesteuerung, die verbale Eingabe der Branche oder das Auswendiglernen der netzweiten Branchenkurzwahl vorausgesetzt, stellt dies eine wesentliche Komfortverbesserung durch den Wegfall des Beschaffungsaufwandes für die individuelle Rufnummer dar.

Durch diese Verfahren kann der Netzbetreiber- oder Serviceprovider eigene Wettbewerbsvorteile durch geeignete Selektion seiner bevorzugten lokalen Branchenpartner nach qualitativen und/oder kommerziellen Kriterien mit einer entsprechenden vertraglichen Bindung generieren, wenn er im gleichen Zusammenhang durch das Angebot qualitativ hochwertiger Serviceleistungen und/oder durch die Weitergabe von Bonianteilen, Großkundenrabatten o.ä. die Akzeptanz seiner Kunden steigert. Im Idealfall führt dies dazu, daß die netzbetreiber- oder serviceproviderseitigen Branchenpartner im waren Sinn des Wortes die erste Wahl für die Netzbetreiber- oder Serviceproviderkunden sind.

Die Erfindung wird unter Verwendung von Zeichnungsfiguren, die hier lediglich eine mögliche Ausführungsart am Beispiel des verbreiteten GSM-Netzes in schematischer Darstellung beschreiben, erläutert, wobei sich anhand der Zeichnungsfiguren weitere Anwendungsgebiete und Ansprüche ergeben.

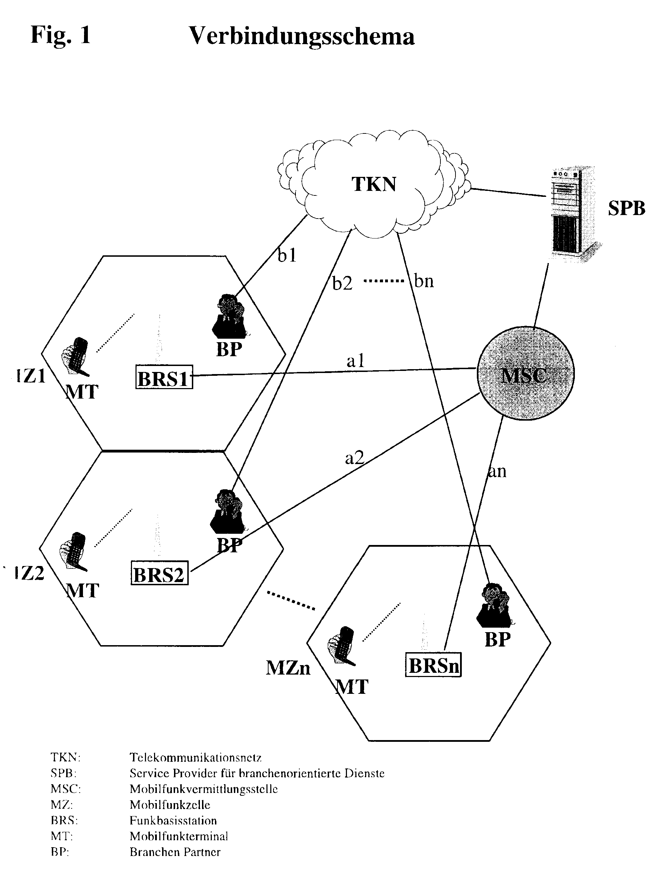

Fig.1 zeigt das Verbindungsschema. Ein mobiler Kunde innerhalb einer Mobilfunkzelle (MZ) stellt mittels mobilem Endgerät (MT) eine vorzugsweise Kurzwahlverbindung über zugehörige Funkbasisstation (BRS) zur Vermittlungsstelle des Mobilfunknetzes (MSC) her. Dort wird mittels geeigneter Verfahrensweise (s.u.) die individuelle Rufnummer eines branchenspezifischen Partners (BP), der dem Anrufsort zugeordnet ist (beispielsweise innerhalb der gleichen Zelle, einer Stadt o.ä.) ermittelt und die Verbindung von MT zu individuellen BP hergestellt.
In Fig. 1 wird die Funktionalität der Zuordnung der individuellen Rufnummer und die Weitervermittlung (Verbindung) von einem netzexternen branchenspezifischen Serviceprovider (SPB) erfüllt. In einer alternativen zur Anwendung kommenden Ausführungsform ist diese Zuordnungs- und Vermittlungsfunktionalität innerhalb des Mobilfunknetze, z.B. in den IN-oder vermittlungsspezifischen Einrichtungen (Intelligent Network) angeordnet. Hierbei besteht eine feste Zuordnung der Branchenpartner zum entsprechenden Mobilfunknetz, wobei die komplette erfindungsgemäße Funktionalität in diesem integrierten Fall softwaremäßig realisiert werden kann. Ein weiter Vorteil dieser Anordnung besteht im reduzierten Verbindungsaufwand, für die Anwendungsfälle, wo der BP nicht wie beispielhaft abgebildet, über ein externes Festnetz, sondern als Mobilfunkkunde im gleichen Mobilfunknetz erreichbar ist.

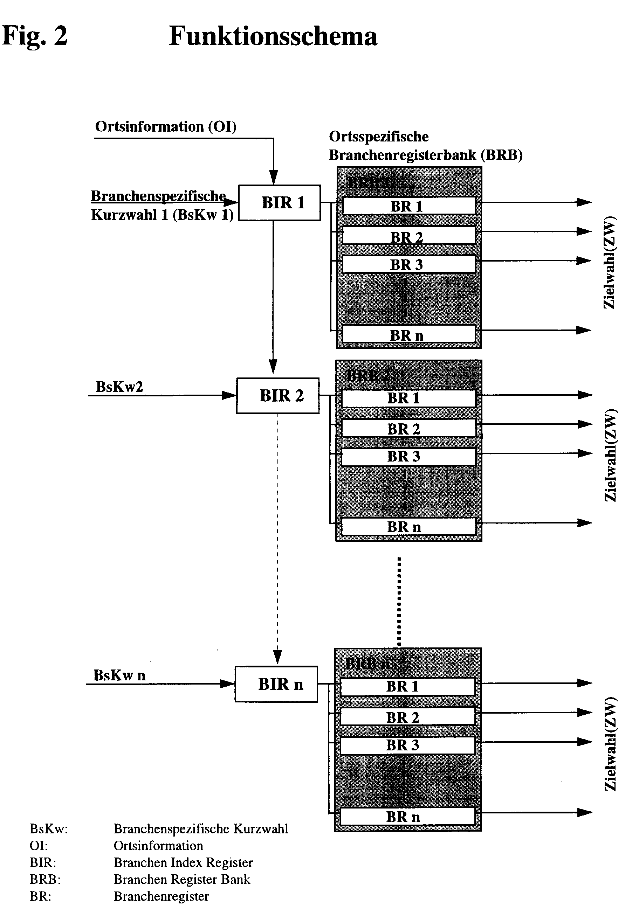

Fig. 2 zeigt das Funktionsschema. Die Kernfunktionalität besteht darin, daß eine branchenspezifische Kurzwahlnummer (beispielsweise Touristikinformation) zusammen mit einer Ortsinformation kombiniert wird, um den für den jeweiligen Aufenthaltsort des Anrufers zuständigen Branchenpartner zu ermitteln und eine entsprechende Verbindung herzustellen. Die Ortsinformation kann wahlweise mobilfunknetzspezifisch generiert werden, oder als Information seitens MT (beispielsweise mittels Global Positioning System GPS ermittelt) vorliegen.

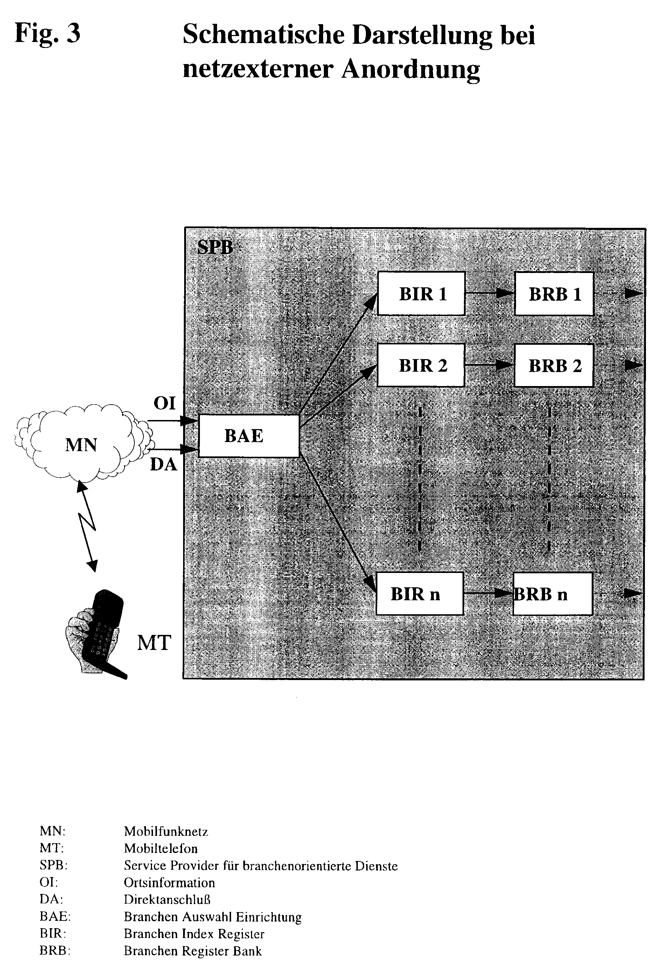

Fig. 3 zeigt die schematische Darstellung des SPB bei netzexterner Anordnung. Im Gegensatz zu einer netzinternen Anordnung der erfindungsgemäßen Funktionalität wird in diesem Fall der Branchenserver mittels einer serverspezifischen und für alle Branchen einheitlichen Kurzrufnummer erreicht, oder es sind mehrere unterschiedliche branchenspezifische Server erforderlich. Zumindest im ersten Fall muß die BAE über eine Vorrichtung zur Branchenauswahl durch den Anrufer verfügen (beispielsweise menuegesteuert). Die erfindungsgemäße Verfahrensweise ist neben der Komfortverbesserung für die Anrufer auch insbesondere in kommerzieller Hinsicht für die betroffenen Branchenpartner interessant. Insbesondere bei MTs mit komfortabler Menuesteuerung oder der Möglichkeit einer verbalen Brancheneingabe sind diese Partner voraussichtlich die 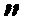 erste Wahl" der Mobilfunkkunden, da jeglicher Beschaffungsaufwand für Rufnummern entfällt.

Das Verfahren kann in diesem Sinne auch zur Serviceverbesserung der Netzbetreiber oder Serviceprovider (NB/SP) für seine Kunden bzw. zur Besetzung neuer serviceorientierter Geschäftsfelder verwendet werden. Beispielsweise kann ein NB/SP seinen Kunden einen bestimmten Qualitätsstandard oder eine bestimmte Erreichbarkeit seiner Branchenpartner durch den Abschluß geeigneter Verträge mit diesem Partner garantieren. Andererseits besteht durch dieses Verfahren die Möglichkeit einer Provissionsbeteiligung der NB/SP an den Umsätzen des Branchenpartners, bzw. eines Großkundenrabattes, der zumindest zum Teil durch beispielsweise eine Serviceverbilligung an die Anrufer weitergegeben werden kann.

## Patentansprüche

1. Verfahren zum Betrieb ortabhängiger Vermittlungsdienste in Telekommunikationsnetzen, dadurch gekennzeichnet, daß der jeweilige Anrufer mittels einer netzweit einheitlichen Interessen- oder Zielgruppenrufnummer, vorzugsweise einer Kurzrufnummer (im folgenden mit 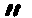 Brachenrufnummer" gekennzeichnet), automatisch ein individuelles ortnahes Ziel (im folgenden mit 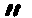 individueller Branchenpartner" bezeichnet) erreichen kann.

2. Verfahren gemäß Anspruch 1, dadurch gekennzeichnet, daß die technische Realisierung zur Ermittlung der individuellen Rufnummer des ortsspezifischen Branchenpartners durch die gemeinsame Bewertung der Branchenrufnummer sowie der Lokalisierungsinformation des Anrufers gebildet wird, wobei sich durch die Kombination beider Informationen die Adresse/Lokation einer entsprechenden Speicherstelle ergibt, innerhalb derer sich die netzbetreiber- oder serviceproviderseitig zuvor eingetragene Rufnummer des individuellen Branchenpartners befindet.

3. Verfahren gemäß einem der Ansprüche 1 bis 2, dadurch gekennzeichnet, daß das erfindungsgemäße Verfahren gemäß dem Stand der technischen Möglichkeiten der Telekommunikationsnetze vorzugsweise die ortsabhängige Komponente als Zielgruppenspezifisches Auswahlmerkmal zum Erreichen einer individuellen Rufnummer verwendet wird, daß jedoch bei fortschreitenden technologischen und rechtlichen Möglichkeiten wahlweise zusätzliche oder alternative Kriterien zum Erreichen eines individuellen Branchenpartners mittels netzweit einheitlicher Branchenrufnummer möglich sind, beispielsweise tageszeit- und datumabhängige Ziele, anruferspezifische Ziele (automatische Kunden/Branchenzuordnung), ursprungsnetzspezifische Ziele (z.B. bei unabhängigen Serviceprovidern, die den erfindungsgemäßen Branchenrufdienst für mehrere Telekommunikationsnetzbetreiber betreiben) etc.
Ergänzend bzw. alternativ zur Lokalisierungsinformation werden in diesen Fällen zusätzliche oder alternative Kriterien zur indzierten Ermittlung der Rufnummer des individuellen Branchenpartners herangezogen.

4. Verfahren gemäß einem der Ansprüche 1 bis 3, dadurch gekennzeichnet, daß die technischen Einrichtungen zur Ermittlung der Rufnummern der individuellen Branchenpartner sowie die Speichereinrichtungen der Rufnummern der individuellen Branchenpartner in einer bevorzugten hardwaresparenden Ausführungsform vorzugsweise als zusätzliche Softwarefunktionalität innerhalb der Telekommunikationsnetze, vorzugsweise in den Vermittlungsknoten bzw. den Intelligent Network-Komponenten, intern wird.

5. Verfahren gemäß einem der Ansprüche 1 bis 4, dadurch gekennzeichnet, daß die technischen Einrichtungen zur Ermittlung der Rufnummern der individuellen Branchenpartner sowie die Speichereinrichtungen der Rufnummern der individuellen Branchenpartner in einer alternativ bevorzugten Ausführungsform als separate Servereinrichtung extern an das betreffende Telekommunikationsnetz / an die betreffenden Telekommunikatinsnetze angeschaltet wird und in dieser Konfiguration beispielsweise alternativ durch einen unabhängigen Serviceprovider betrieben werden kann.

6. Verfahren gemäß einem der Ansprüche 1 bis 5, dadurch gekennzeichnet, daß der Netzbetreiber oder Serviceprovider, der auf Basis der erfindungsgemäßen Verfahrens seinen Kunden einen entsprechenden Branchenvermittlungsdienst anbieten, einen Wettbewerbsvorteil durch ein geeignetes, auf qualitativen und/oder kommerziellen Gesichtspunkten basierendes, Selektionsverfahren seiner individuellen Branchenpartner erreicht und im gleichen Zusammenhang seinen Kunden einen serviceorientierten oder kommerziellen Vorteil verschafft.

7. Verfahren gemäß einem der Ansprüche 1 bis 6, dadurch gekennzeichnet, daß die technischen Einrichtungen zur Erfüllung der erfindungsgemäßen Funktionalität optional durch eine zusätzliche Einrichtung (Branchenauswahleinrichtung BAE) erweitert wird, die eine Kommunikation mit dem Anrufer, bzw. seinem Endgerät ermöglicht und demgemäß zur Selektion der Branchen, der individuellen Partner oder anderer Kriterien dient. Hierzu bieten sich alternative technische Verfahren, wie beispielsweise sprachgesteuerte Benutzerhinweise in Kombination mit der taktilen Benutzung der Endgerätetastatur (Mehrfrequenzwahlverfahren) durch den Anrufer, die unmittelbare Spracherkennung innerhalb der BAE oder die menuegesteuerte Benutzerführung mittels Klartext oder Piktogrammen in Verbindung mit den Endgeräten, bzw. eine Kombination der unterschiedlichen Verfahren an.

8. Verfahren gemäß einem der Ansprüche 1 bis 7, dadurch gekennzeichnet, daß die Lokalisierungsinformation anwendungsspezifisch bedarfsweise durch die taktile und/oder sprachliche Interaktion des Anrufers übermittelt wird, in den bevorzugten Ausführungsformen jedoch automatisch durch telekommunikationsnetzinterne Verfahren oder den anwenderseitigen Einsatz einer Global Positioning System-Empfangseinrichtung (GPS) ermittelt und ebenso automatisch zur erfindungsgemäßen Einrichtung übertragen wird.

9. Verfahren gemäß einem der Ansprüche 1 bis 8, dadurch gekennzeichnet, daß die erfindungsgemäße Verfahrensweise in alternativ bevorzugten Anwendungsfällen nicht mit der für leitungsvermittelten Netze üblichen Fernsprechrufnummer/Teilnehmerrufnummer, sondern bei der Anwendung in alternativen Telekommunikationsnetzen auch mit den jeweils üblichen Routingkriterien, beispielsweise X.25 Adressen in X.25-basierenden Paketvermittlungsnetzen (z.B. Datex-P-Netz der deutschen Telekom o.ä.) oder IP-Adressen in IP-basierenden Paketvermittlungsnetzen (z.B. General Packet Radio Servive 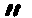 GPRS" innerhalb der Global System for Mobile Communikcations-Netze 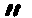 GSM", dem zukünftigen Universal Mobile Communication System 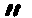 UMTS", bzw. dem öffentlichen Internet) etc. erfolgt, wobei in solchen alternativen Netzen alternativ zur Sprachverbindung in leitungsvermittelten Netzen fallspezifische eine dem erfindungsgemäßen Sinn entsprechende Datenverbindung zur Anwendung kommt.

10. Verfahren nach einem der Ansprüche 1 bis 9, dadurch gekennzeichnet, daß das Verfahren in einem Mobilfunknetz erfolgt.
